# EUROPEAN PATENT APPLICATION

(11) **EP 4 414 045 A1**
(43) Date of publication of application: **14.08.2024**
(21) Application number: 24157082.9
(22) Date of filing: 12.02.2024
(51) Int. Cl.: B01D 46/04, B01D 46/06, B01D 46/42, B01D 46/71

(54) **DEVICE FOR SUPPLYING PRESSURIZED AIR INTO A TUBULAR FILTER**

(30) Priority: 13.02.2023 IT 202300002421; 28.07.2023 IT 202300015945
(71) Applicant: Clean Air Europe Srl, 23892 Bulciago (LC) (IT)
(72) Inventor: MAGGI, Corrado, 23892 Bulciago (LC) (IT); MONTANELLI, Luigi, 23892 Bulciago (LC) (IT)
(74) Representative: Marietti, Andrea

(57) **Abstract**

The invention concerns a device for supplying pressurized air into a tubular filter (100) supported by a basket (101) provided with an upper collar (16), wherein the aforesaid device comprises at least one Venturi tube (12, 22, 32) of the type comprising an inlet portion (13, 23, 33), a narrow cylindrical portion (11, 21, 31) and an outlet portion (15, 25, 35), said Venturi tube (12, 22, 32) being provided, at its inlet portion (13, 23, 33), with a ring-shaped bracket (14, 24, 34) connectable to the aforesaid basket (101) by means of a plurality of fastening and connecting supports (19, 29, 39) configured for reversibly fastening to one another and distancing the aforesaid ring-shaped bracket (14, 24, 34) from the upper collar (16) of the basket (101) and for defining at least one portion for the passage of air between the Venturi tube (12, 22, 32) and the basket (101), said outlet portion (15, 25, 35) of the Venturi tube being shaped for being housed within the tubular filter (100).

## Description

### FIELD OF THE INVENTION

The present invention concerns a device for supplying pressurized air into flexible tubular filters organized in tube plates.

More in particular, object of the present invention is a device which is designed for directing a flow of pressurized air into a tubular filter provided in a system for collecting and treating dust generated in an industrial process or the like, in order to clean said filter by means of a succession of pressure pulses.

### KNOWN PRIOR ART

It is known that dust generated in industrial processes is a significant cause of respiratory diseases.

Negative effects caused by pollutants present in the air, such as precisely dust generated in industrial processes, are becoming increasingly more severe.

Due to these problems, systems for collecting dust are used increasingly more often since dust generated by industrial processes is not only in high amounts but can also contain toxic substances.

Consequently, continuous research has been carried out to increase the efficiency of devices for collecting dust for treating dust in industrial processes.

It is known art to collect dust in filtering devices constituted by a plurality of flexible tubular filters, generally of the textile type, each flexible tubular filter being supported by a respective basket, or cage, which has at least one end collar for mounting the respective tubular filter on a pierced plate, named "tube plate", which bears a plurality of such tubular filters.

For the purpose of cleaning the tubular filters, a known art is that of feeding a jet of pressurized air into the tubular filter for a given amount of time (named "shot time"), so that to remove the dust sedimented within the same tubular filter with a dual action: mechanical, due to the shock wave generated by the jet of air, and fluidic.

A further known art is that of using fluidic treatment means, for example one or more Venturi tubes, to obtain a jet of pressurized air for cleaning the tubular filter provided with the desired fluid dynamics characteristics.

The compressor assembly, with the respective nozzle (injector) and the fluidic treatment means functionally combined with each filtering device of the type stated herein, is defined as a pressurized air supply device and has the task of facilitating the cleaning of such type of filtering device.

Document KR101827302B1 describes a solution in which the dust is first collected into a plurality of tubular textile filters, which are then cleaned by means of a succession of pulses or shots of pressurized air channeled through them by appropriate devices.

Each of such devices provides a Coanda effect nozzle (i.e. as known, the effect according to which a fluid tends to adhere to the convex part of a solid surface) with one or more Venturi profiles arranged in series, such as to substantially increase the flow rate of the gas used to clean the filtering sleeve. The Venturi duct can be formed by multiple Venturi profile portions arranged in series one with respect to the other in the forward direction of the pressure pulse.

Document KR100776693B1 describes a solution named "multi venturi" with a collector for providing a jet of compressed air to a plurality of filtering sleeves, each connected to an individual nozzle of variable section. Each individual filtering sleeve receives a jet of compressed air which crosses a first Venturi of little dimensions to then pass, in series, to a second larger Venturi leaned against the upper edge of the filtering sleeve. Each Venturi draws flows of surrounding air, which are added to the initial flow of compressed air, with both Venturi tubes constituting a serial configuration in the upper region of the filtering sleeve.

The prior patent KR101228884B1 teaches how to make a collector provided with a converging inlet portion and a narrow cylindrical portion and which is arranged with its outlet mouth of the narrow portion at the inlet portion of a cylindrical cartridge filter. Since being devoid of a divergent outlet portion, such collector is not a Venturi tube and is arranged at a distance from the inlet portion of the cartridge filter, thanks to a filter shaped like a circular crown.

In the prior art illustrated in such patent KR101228884B1, a device for cleaning a cartridge filter, which involves the use of a Venturi tube partially inserted into the cartridge filter itself so that to be raised by such cartridge filter by means of step-shaped supports which are designed to be able to allow a limited passage of air between the cartridge filter and the Venturi tube, is further visible. KR101228884B1, in addition to the fact that it concerns a cartridge filter and not a filtering device with a basket which supports a tubular filter, and that it does not describe such possible passage of air between the cartridge filter and the Venturi tube of the prior art illustrated, does not provide for the step-shaped supports to be able to fasten the Venturi tube to the same cartridge filter but seems to show that the same only act as supports for the Venturi tube.

The technical problems left open by these and other known solutions can be summarized as follows.

First of all, the use of such devices for collecting dust can lead to high energy expenditures due to scarce optimization of the fluidic flows.

Secondly, in the pressurized air supply device for cleaning such tubular filters, a succession of too many pulses or shots of pressurized air can lead to a reduction in the useful life of the textile filter.

Moreover, whenever having to replace the nozzles, it may be necessary to implement complex operations of disassembling and replacing the Venturi tube or even the pressurized air supply device for cleaning the filter.

Object of the present invention is therefore to:
- Increase the flow rate of air fed into the basket and thus into the tubular filter (sleeve);
- Increase the peak pressure of the air fed into the basket during the filter cleaning operation;
- Decrease the arrival time of the shot pressure during the filter cleaning operation;
- Improve the energy efficiency of the compressor for the cleaning;
- Decrease the energy consumption of the fan (compressor) by lowering the integral of the pressure differentials which trigger the cleaning shot;
- Reduce energy consumption also during the normal operating step of the filtering device during suction;
- Distribute the powder load on the sleeve more evenly, by better leveling the peak pressure and thus achieving more homogeneous cleaning of the sleeve itself;
- Extend the lifetime of the sleeve with a lesser number of shots;
- Quickly assemble and disassemble the invention, to facilitate its replacement repair and replacement thanks to connecting elements;
- Reuse the invention for a new basket in view of sustainability;
- Adapt the invention to systems with pre-existing baskets to improve their fluid catchment and energetic characteristics.

Further object of the invention is to obtain the aforesaid result in a practical and economical way.

### BRIEF SUMMARY OF THE INVENTION

These and further objects are achieved by a device for supplying pressurized air into a tubular filter, in particular of the flexible sleeve type, supported by a basket provided with an upper collar, wherein the aforesaid device comprises at least one Venturi tube of the type comprising - in axial direction - a preferably converging inlet portion, a narrow cylindrical portion, i.e. a descending groove, and a substantially divergent outlet portion, said Venturi tube being provided, at its inlet portion, with a ring-shaped bracket connectable to the aforesaid basket by means of a plurality of fastening and connecting supports configured for reversibly fastening to one another and distancing the aforesaid ring-shaped bracket from the upper collar of the basket and for defining at least one portion for the passage of air between the Venturi tube and the basket, said outlet portion of the Venturi tube being shaped for being housed within the tubular filter.

An advantage of the present invention is that it involves the inlet portion of the Venturi to be raised, which allows to increase the flow rate of air coming in beyond the physical limit of the collar which, being arranged on the tube plate (i.e. that plate supporting the various baskets of the tubular filters in an industrial system), is subjected to dimensional limits due to the deployment of the contiguous filtering elements.

Moreover, the inflow/outflow of air affecting the volume interposed between the basket, and consequently the tubular filter (or sleeve) supported by the basket, and the Venturi tube allows to obtain effective cleaning also of that section of the tubular filter which is at the portion of the Venturi tube housed within the same tubular filter.

In fact, the making of a portion for the passage of air between the basket and the Venturi tube, which necessarily involves a volume for the passage of air between the tubular filter and that portion of the Venturi tube housed within such tubular filter to be defined, results in the fact that a flow of air, which also affects and thus cleans that section of the tubular filter located at the Venturi tube, is established while cleaning the filter.

Furthermore, the presence of such portion (section) for the passage of air between the basket and the Venturi tube facilitates the passage of the air flow to be cleaned within the filtering device during the normal operation of the same filtering device during suction.

In fact, unlike conventional filtering devices in which the Venturi tube is surrounded, in contact, by the collar of the tubular filter, thus determining a narrowing of the section for the passage of air to be filtered within the narrow portion of the Venturi, the aforesaid passage portion (section) between collar and Venturi ensures that there is no significant narrowing of the section useful for the passage of air during the filtering activity during suction.

According to an embodiment of the invention, at least one axial opening is provided on the aforesaid ring-shaped bracket and through which a flow of pressurized air can flow.

The axial openings facilitate the suction and movement of the air in the area contiguous to the Venturi itself, thereby facilitating the cleaning of the sleeve and the passage of the filtered air, also in areas less affected by the shock wave generated by the nozzle operated by the compressor.

Such openings also facilitate the passage of air sucked during the normal operation of the filtering device, i.e. whenever the tubular filter is affected by a flow of air during suction.

It must be noted that, herein and hereafter, the term "axial" refers to the axis according to which the sleeve extends, i.e. the tubular filter, which is generally of cylindrical shape with a circular base, and according to which the at least one Venturi tube claimed extends. According to a further preferred embodiment of the invention, the outer diameter of the ring-shaped bracket is equal to or greater than the outer diameter of the upper collar of the basket. Whenever the outer diameter of the ring-shaped bracket is greater than the outer diameter of the upper collar of the basket, a greater collection diameter, which allows to increase, among other, the flow rate of air fed into the basket, is generated.

In a further preferred embodiment, the ratio between the maximum diameter of the inlet portion of the Venturi tube and that of the narrow portion is between 1.4 and 1.9.

Such ratio has proven to be optimal for generating a flow of pressurized air flowing out of the outlet portion of the Venturi tube for cleaning the tubular filter and allowing an adequate passage of air between the Venturi tube and the basket supporting the sleeve-shaped filter, while cleaning.

It should be noted that, in preferred embodiments of the invention, the diameter of the inlet portion of the Venturi tube coincides with the inner diameter of the respective ring-shaped bracket.

Further characteristics and advantages of the invention can be deduced from the other dependent claims.

### BRIEF DESCRIPTION OF THE FIGURES

The details and advantages of the invention will anyhow become clearer from the description set forth below of some examples of its preferred, but non-limiting, embodiments with reference to the accompanying drawings, in which:
- figure 1 is an axonometric view of a first embodiment of the device of the invention;
- figure 2 is a sectional view, along an axial plane, of the device of figure 1;
- figure 3 is an axonometric view of a second embodiment of the device of the invention;
- figure 4 is a sectional view, along an axial plane, of the device of figure 3;
- figure 5 is a graph comparing the peak pressure of the air fed into the basket during the filter cleaning operation, depending on its position along the basket, between a known device and a device according to an embodiment of the invention;
- figure 6 is a graph comparing the times for reaching the peak pressure of the air fed into the basket during the filter cleaning operation, depending on its position along the basket, between a known device and a device according to an embodiment of the invention;
- figure 7 shows a graph depicting the greater efficiency of the invention compared with the known art; and
- figure 8 shows a schematic view of an example of a tube plate surmounted by a tube plate on top for the coupling of tubular filters provided with a device according to a particular aspect of the invention;
- figures 9 and 10 schematically depict a further embodiment of the present invention;
- figure 11 shows, by way of example, a filtering device devoid of the tubular filter (sleeve) and to which a pressurized air supply device is coupled for cleaning according to the present invention;
- figure 12 schematically depicts the area of the portion for the passage of air between the Venturi tube and the basket and the area inside the tubular filter, whose ratio is mentioned below.

### DETAILED DESCRIPTION OF SOME EMBODIMENTS OF THE PRESENT INVENTION

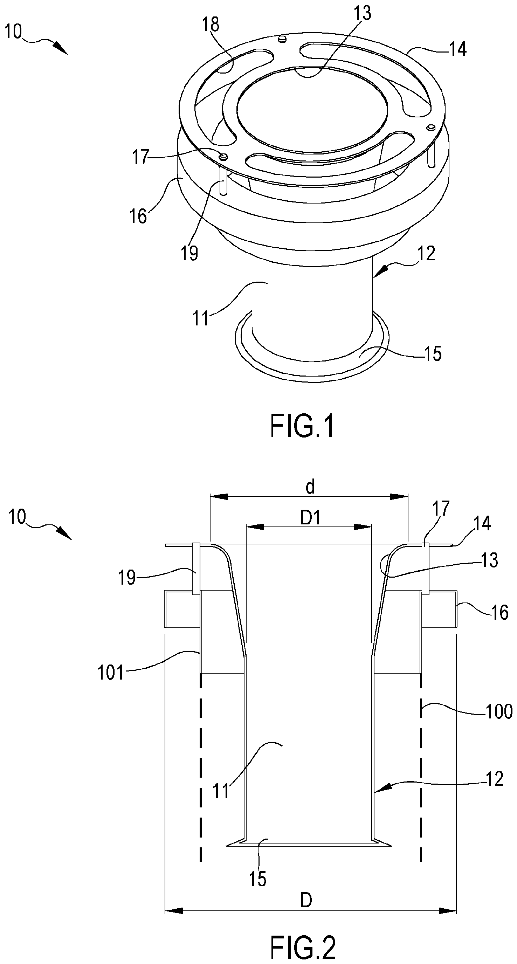

With initial reference to figures 1-2, they represent a first embodiment of the device of the invention generally denoted by the numerical reference 10.

Such device 10 is a pressurized air supply device inside a tubular filter 100, preferably of the cylindrical sleeve type with a circular base, known per se, for the purpose of cleaning the same tubular filter 100.

It should be noted here that the expression "tubular filter" herein refers to that flexible portion (sleeve), generally made of a flexible material, of a filtering device for filtering dust and which is generally installed within industrial plants of the steel, cement, chemical, waste-to-energy, food, waste, agriculture and oil & gas sectors, and which flexible portion is supported by a special basket (or cage) generally made of metal and provided with a respective collar on top, which is generally provided for its assembly in tube plates in which batteries of such filtering devices are arranged.

The device 10 comprises a Venturi tube 12 (herein denoted in short as "Venturi") which, as known, in turn comprises, in succession along its axis, a preferably truncated-cone shaped inlet portion 13 (or inflow mouth) which is tapered so that to converge towards a narrow cylindrical portion 11, herein also named descending throat (it should be noted that, in this application, the Venturi is generally mounted vertically with the inlet portion 13 higher than the outlet portion 11) or also throttling, which is in turn generally followed by an outlet portion 15 also generally truncated-cone shaped and tapered towards the outside, i.e. diverging towards the outside.

In the cleaning device 10, the converging inlet portion 13 of the Venturi 12 constitutes the mouth for the inflow of the cleaning fluid (air) which is injected under pressure into the same Venturi 12 by an outer upper nozzle in turn supplied by a special compressor for cleaning the tubular filter 100.

The diverging outlet portion 15 constitutes the mouth for the outflow of the pressurized cleaning fluid (air) into the tubular filter 100. Such outlet portion 15 is at least partly contained within the tubular filter 100.

According to an aspect of the invention, the Venturi tube 12 is provided with a ring-shaped bracket 14 connectable to the basket 101 of a tubular filter 100 by means of a plurality of fastening and connecting supports 19, such as spacers, brackets, screws or rivets, or also magnetic elements or spring-like elements or elements with rotationally interlocking seats or also others known to the expert of the field and which are able to fasten, in a non-permanent way, i.e. a reversible way, the ring-shaped bracket 14 to the respective basket 101, so that such components are appropriately spaced from one another.

The fastening and connecting supports 19, as will become clearer below, are shaped for reversibly fastening and spacing, preferably at least axially, the aforesaid ring-shaped bracket 14 from the upper collar 16 of the basket 101 and for defining at least one portion for the passage of air between the Venturi tube 12 and the same basket 101.

As mentioned, the basket 101 of the tubular filter 100 has, at one of its ends, a collar 16 which is engaged with the Venturi 12 and supports the flexible part (sleeve) of the basket 101, i.e. the tubular filter 100. According to the known art, it should be noted that such basket 101 can be made in the shape of a cage of axial extent to support and keep the tubular filter 100 in position.

Herein and below, it should be noted that the term "basket" 101 means that part of a dust filtering device which comprises the support for a flexible filtering part, also denoted as tubular sleeve or also as tubular filter 100 and, as mentioned, an upper end collar 16 which is intended to be constrained to the Venturi tube 12, in addition to constraining the sleeve or tubular filter 100 and allowing the assembly on an appropriate tube plate.

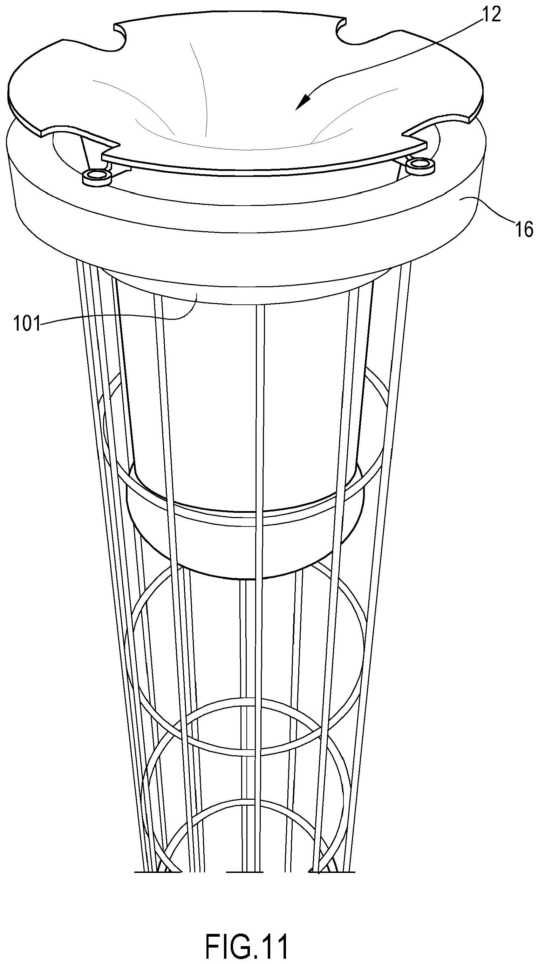

A basket 101, to which the upper collar 16 is fastened to a Venturi tube 12 of the type specified above, is represented in figure 11.

The fastening and connecting supports 19 for fastening and connecting the Venturi tube 12 to the collar 16 are configured for distancing the ring-shaped bracket 14 from the same upper collar 16 of the basket 101, so that to define at least one portion for the passage of air between the Venturi tube 12 and the same basket 101, and are insertable into respective holes 17 with which the ring-shaped bracket 14 is provided. Such fastening and connecting supports 19 also have the task of reversibly fastening the ring-shaped bracket 14 and the upper collar 16 to one another, so that to ensure that the respective positions of such components are stably maintained also in the presence of vibrations during use or during the activities for cleaning the filtering device.

The ring-shaped bracket 14 preferably has an outer diameter equal to or greater than the diameter of the upper collar 16 of the basket 101.

Such fastening and connecting supports 19, in addition to the shape of the Venturi tube 12, also determine that at least the outlet portion 15 and generally also much of the narrow portion 11 of the Venturi tube 12 are housed within the tubular filter 100, i.e. the flexible sleeve, of the filtering device.

The portion for the passage of air between the Venturi tube 12 and the basket 101 allows a flow of air to pass between the Venturi tube 12 and the same basket 101 during the cleaning activities, i.e. when firing the "shot" (injection) of a flow of air into the Venturi tube 12, this way also affecting that volume between the tubular filter 100 and the portion of the Venturi tube 12, which portion is housed within the same tubular filter 100, and this way also allowing to clean such portion of the tubular filter 100 from dust.

In fact, as is known, the cleaning of the tubular filter 100 is carried out by injecting (for a predefined amount of time, named "shot time") a flow of pressurized fluid (for example air) into the Venturi 12, or better into the respective inlet portion 13, which, with the supply of air drawn by the Venturi 12 itself at its inlet portion 13 according to Bernoulli's law and by the dragging effect of the fluid injected, generates a shock wave which propagates in the tubular sleeve, i.e. in the tubular filter 100, thus mechanically (shaking) and fluidically allowing the effective cleaning of the same sleeve 100, substantially in the section downstream of the outlet portion 15 of the Venturi 12 itself.

The establishment of a passage of a flow of air, allowed *inter alia* by the fastening and connecting supports 19 of the present invention, between the basket 101 and the Venturi 12 and thus between the tubular filter 100 and the Venturi 12, also allows effective cleaning in that area of the tubular filter 100 placed at that part of the Venturi 12 which is housed in the same tubular filter 100.

Moreover, it should be pointed out that such passage portion defined between the Venturi tube 12 and the basket 101 allows to substantially keep unchanged, even in the presence of the Venturi tube at least partly housed within the tubular filter 100, the useful air passage portion during the normal use of the filtering device, i.e. whenever a flow of air, to be cleaned from dust, is induced as suctioned into the tubular filter 100.

The fastening and connecting supports 19 are generally arranged at a constant angular distance in the number of 3 or 4 and allow the recovery and easy assembly and disassembly of the Venturi 12 by inserting connection elements through the holes 17 formed on the ring-shaped bracket 14 and possibly through corresponding holes formed on the collar 16.

This particular design thus allows the recovery and reuse of the Venturi 12, with clear advantages in terms of sustainability.

A characteristic of the invention is that of being easily removable and replaceable without requiring special devices or specific equipment, thus being able to be applied on baskets 101 with a collar 16 generally provided with a flat folded metal sheet edge, as depicted in figure 2.

The axial distance, in elevation, of the ring-shaped bracket 14 from the collar 16, obtained thanks to the shape of the fastening and connecting supports 19, is preferably not less than 10mm.

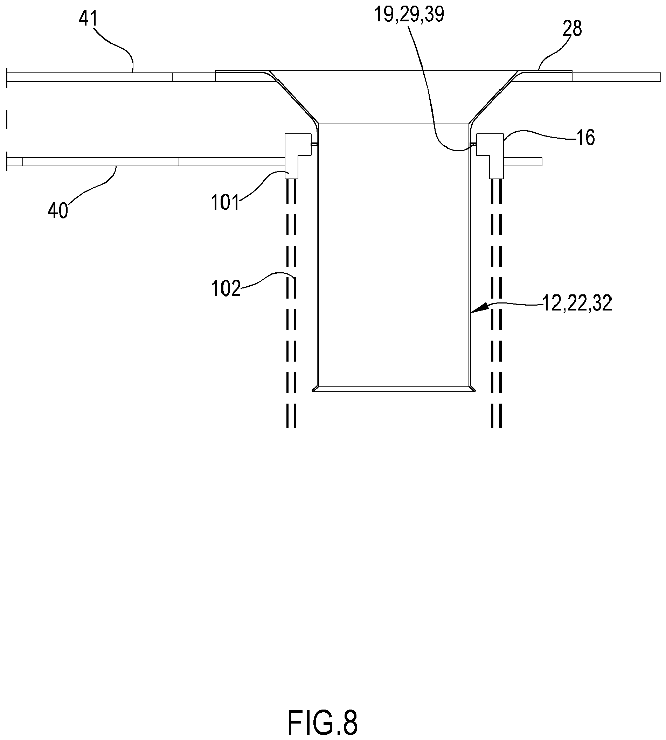

It should be noted the elevation of the inlet portion 13 of the Venturi 12 over the basket 16 allows to increase the flow rate of the air coming in beyond the physical limit of the collar 16 which, being arranged on the tube plate (see figure 8, with the tube plate denoted by 40), is subjected to dimensional limitations due to the arrangement of the contiguous tubular filters 100.

The effect is thus that of enhanced cleaning action, since the greater width of the inlet throat, i.e. of the inlet portion 13, and the greater length of the intermediate section (narrow portion) 11 of the Venturi 12 can increase the peak pressure and decrease the shot time to better shake off the dust from the tubular filters 100.

As visible in figure 1, according to an aspect of the invention, three axial openings (or windows) 18 are provided on the ring-shaped bracket 14.

Such axial openings 18 facilitate the passage of air in the area contiguous to the Venturi 12 itself, thus further facilitating the cleaning of the tubular sleeve 100 and the passage of air, also in areas less affected by the shock wave generated, at the outlet of the Venturi 12, by the flow of air injected by the cleaning nozzle (injector) operated by an appropriate compressor.

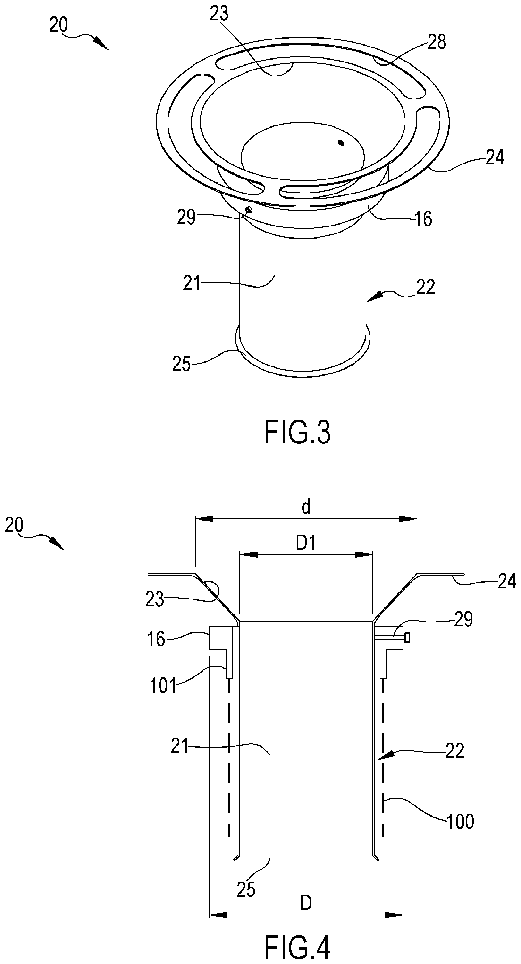

Figures 3-4 represent a second embodiment of the device of the invention, generally denoted by the numerical reference 20.

Such second embodiment has a Venturi 22 connected to the collar 16 of the basket of a tubular filter 100 in a way strictly similar to the Venturi 12 of the first embodiment.

However, in this second embodiment, the outer diameter of the ring-shaped bracket 24 is greater to that of the ring-shaped bracket 14 of the device 10 of the first embodiment, thus defining a greater diameter for collecting the air drawn into the Venturi 22, which allows to increase, among other, the flow rate of the air fed into the basket 101.

In the embodiment of figures 3 and 4, it should be noted that both the diameter of the ring-shaped bracket 24 and the maximum diameter d of the inlet portion 23 of the Venturi 22 are greater to the outer diameter D of the upper collar 16 of the basket 101 of the tubular filter 100.

It should also be noted that the ring-shaped bracket 24 of the Venturi tube 22 is also provided with axial openings 28 to facilitate the passage of air directed to the portion for the passage of air between the basket 101, and thus the tubular filter 100, and the Venturi tube 22.

The outer diameter of the throttling or descending throat (narrow portion) 21 of the Venturi 22 is compatible with the inner diameter of the collar 16 of the basket 101 of the tubular filter 100 and is easy to be fastened with one or more screws or safety grub screws 29, which also act as spacers and thus constituting the aforesaid fastening and connecting supports for reversibly fastening and distancing the ring-shaped bracket 24 of the Venturi tube 22 and the upper collar 16 of the basket 101 from one another, for the purpose of keeping the respective position between the Venturi 22 and the collar 16 stable, as shown in figure 4.

In practice, the outer diameter of the narrow cylindrical portion 21 of the Venturi 22 is slightly less than the inner diameter of the upper collar 16 of the basket 101, so that to allow to easily fasten and distance such components from one another, for example by means of the aforesaid threaded coupling means 29.

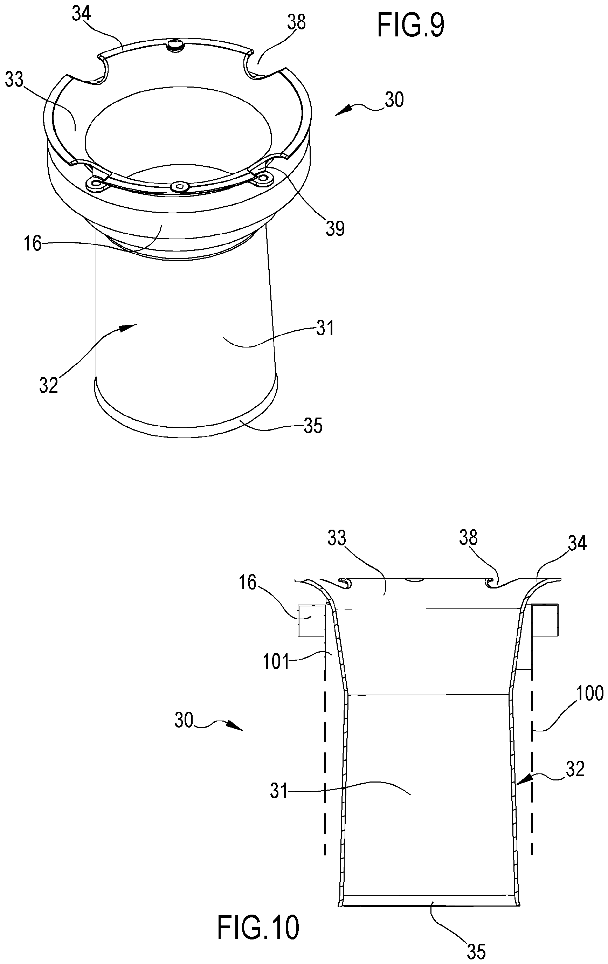

A further embodiment of the invention, generally denoted by 30, is depicted in figures 9 and 10.

Similarly to the one in figures 1, 2, 3 and 4, the pressurized air supply device 30 depicted in these figures 9 and 10 is adapted for cleaning a tubular filter 100 of the type supported by a respective basket 101 having an upper collar 16.

The device 30 comprises a Venturi tube 32 provided with a converging inlet portion 33, a narrow portion 31 and a diverging outlet portion 35, shaped for being partially inserted into the upper region of a tubular filter 100.

The device 30 further comprises a ring-shaped bracket 34 substantially coinciding with the upper surface of the inlet portion 33 of the Venturi 32, which portion is provided with substantially axial openings 38 formed on the same edge of such ring-shaped bracket 34, so as to define concave recesses on that edge.

At such openings 38 on the edge of the ring-shaped bracket 34, and thus on the upper surface of the inlet portion 33 of the Venturi tube 32, fastening and connecting supports 39, constituted by shaped flaps integral with the ring-shaped bracket 34 and fastened to the upper collar 16 of the basket 101 by a screw or other threaded fastening means, are present at the bottom so that to distance and stably fasten the ring-shaped bracket 34 and the upper collar 16 from/to one another.

The shape of such flaps 39 is such that, once fastened to the upper collar 16 of the basket 101 of the tubular filter 100, they distance the Venturi tube 32 and the collar 16 from one another, so that to define a portion for the passage of air between such components, so as to allow the passage of a flow of air between the same Venturi tube 32 and the respective tubular filter 100.

Moreover, the threaded fastening means, for example screws, which constrain the lower end of the flaps 39 to the upper collar 16 are arranged at the openings 38 of the ring-shaped bracket 14, so that such openings 38 facilitate the access of a tool for screwing or unscrewing such threaded fastening means.

This way, the openings 38 have the dual task of facilitating the passage of the air directed towards the cavity formed between the Venturi tube 32 and the collar 16 and thus between the Venturi tube 32 and the tubular filter 100, and of facilitating the assembly and disassembly of the same Venturi tube 12 on/from the collar 16, thanks to the fact that they allow a tool adapted for screwing or unscrewing the threaded fastening means which constrain the flaps 39 to the collar 16 to access easily.

Generally, and thus also in the embodiments of the invention shown herein in figures 1-2, 3-4 and 9-10, the maximum diameter of the inlet portion (or inflow mouth) 13 of the Venturi 12 or 22 or 32 (which configures the mouth useful for the inflow of the fluid thereof) is preferably denoted by the lowercase letter "d", whereas the outer diameter of the collar 16 of the basket 101 of the tubular filter 100 is denoted by the capital letter "D".

In the various possible embodiments of the invention, such ratio d/D can vary from a minimum of 0.9 up to a maximum of 1.25, with values centered around 1 on the average (i.e. Venturi not protruding beyond the collar).

Furthermore, it is possible to make the ring-shaped bracket 14, 24, 34 of the Venturi 12, 22, 32 with a diameter greater than the diameter D of the collar 16, naturally thanks to the fact that the fastening and connecting supports 19, 29, 39 between such ring-shaped bracket 14, 24, 34 and the collar 16 define a predefined axial elevation of the inlet portion 13, 23, 33 of the Venturi 12, 22, 32 over the filtering device comprising the basket 101 and the tubular filter 100.

As already mentioned, it is known to assemble a set of two or more tubular filters 100 by using a tube plate 40 (see figure 8), i.e. a plate provided with corresponding holes for the engagement with tubular bodies and which plate is constrained, through the aforesaid holes, to the upper collar 16 of the basket 101 of such tubular filters 100 and holds the tubular filters 100 to one another in predefined geometric relationships and simultaneously defines a leaning surface for those in charge of the maintenance of the same tubular filters 100.

In the case of the cleaning device according to the present invention, in which a Venturi tube 12, 22, 32 is combined with the upper collar 16 of the basket 101 by means of a ring-shaped bracket 14, 24, 34 spaced from the upper collar 16 thanks to the fastening and connecting supports 19, 29, 39 for values of the aforesaid ratio d/D greater than 1, or also for values of the diameter of the ring-shaped bracket 14, 24, 34 greater than the diameter D of the upper collar 16, it is possible to, as shown by way of example in figure 8, use an upper tube plate 41 (with holes wider than those of the underlying tube plate 40 for the collars 16, but concentric to the latter) adapted for being engaged with the inlet portion 13, 23, 33 or inflow mouth of the Venturi tubes 12, 22, 32, so that to constitute the leaning base of the enlarged mouth of such Venturi tubes 12, 22, 32.

The presence of such upper tube plate 41 provides many advantages, such as: mitigating the risk that the Venturi tubes 12, 22, 32 with an oversized inlet portion 13, 23, 33 compared to the respective collar 16 of the filtering tube 100 can be inadvertently trampled and damaged during maintenance; constituting, with the lower tube plate 40, an intermediate dust-tight insulation chamber which can be easily removed in the event of necessary interventions on the worn tubular filters, i.e. tubular sleeves; and finally allowing the baskets 101, with their collars 16, to have various types of closures - at the top of the lower tube plate 40 - with the Venturi tubes 12, 22, 32 which, in this case, can only be fastened to the aforesaid upper tube plate 41 and left loose with respect to the underlying tube plate 40.

This particular ratio between the maximum diameter d of the mouth of the Venturi 12, 22, 32 and the outer diameter D of the collar 16 can also allow to widen the diameter D1 of the descending throat of the Venturi, i.e. of its narrow portion 11, 21, 31, whenever there is a decrease in pressure and an increase in the flowing speed of the fluidic flow, thus making improvements in the pressure (increase) and time (decrease) variables and in the flow rate or mass (increase).

In any case, independently of the ratio d/D, the ratio d/D1 between the maximum diameter d of the inlet portion 13, 23, 33 of the Venturi 12, 22, 32 and the diameter D1 of the corresponding narrow portion 11, 21, 31 of the same Venturi 12, 22, 33 can vary, in the different possible embodiments of the invention, from a minimum of 1.4 up to a maximum of 1.9, more preferably from a minimum of 1.5 up to a maximum of 1.8.

Such values have proven to be particularly effective for generating, in the normal shot times, a shock wave able to optimally clean the tubular filters 100 (which, it should be remembered, have variable lengths from 1 m to 16 m and diameters from 75 mm to 300 mm).

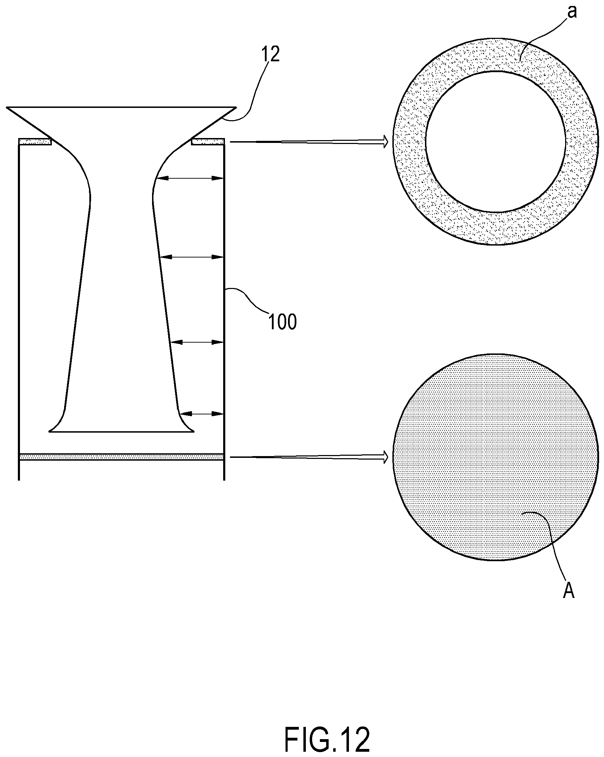

Furthermore, according to a preferred aspect of the present invention, with reference to figure 12, independently of the embodiment of the invention shown herein and of the dimensional ratios identified above with reference to the dimensions of the Venturi 12, 22, 32 and the collar 16 of the tubular filter, the ratio existing between the area (a) of the portion for the passage of air between the Venturi tube 12, 22, 32 and the upper collar 16 of the basket 101 and the area (A) of the portion, orthogonal to the respective axis, of the tubular filter 100, below the Venturi 12, 22, 32, which coincides with the area of the base portion of the tubular filter 100 whenever the latter is cylindrical, was found to be significant.

It should be noted that the area of the portion for the passage of air between the Venturi tube 12, 22, 32 and the upper collar 16 can be approximately calculated as the area of the circular crown portion comprised between the upper collar 16 and the portion of the Venturi 12, 22, 32 leaning on the leaning plane of the upper portion of the collar 16 from which the area occupied by the connecting supports 19 must be subtracted, whenever the latter are present and partially block that passage portion.

Whenever this ratio between the aforesaid areas is between 0.08 and 0.24 (i.e. between 8% and 24%), a high cleaning efficiency of the tubular filter 100 by the compressed air supply device according to the present invention was recorded, not unrelated to a high filtering efficiency whenever the filtering device, to which a device for supplying pressurized air of the type depicted herein is applied, operates in its normal operating conditions, i.e. with the passage of a flow of air sucked into the tubular filter 100.

Preferably, it is recommended to increase this ratio as the area of the portion of the tubular filter 100 orthogonal to the respective axis increases, i.e. as the inner diameter of the same tubular filter 100 increases, if the latter is cylindrical with a circular base.

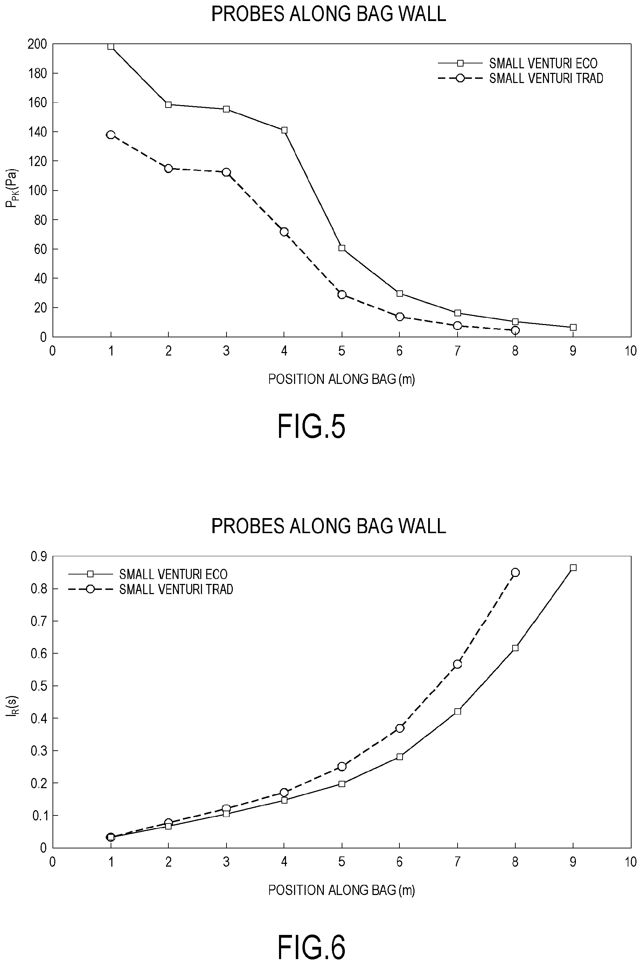

Figure 5 is a graph comparing the peak pressure of the air fed into the basket during the filter cleaning operation, depending on its position along the basket, between a known device and a device according to an embodiment of the invention (whose graph is denoted by cross-shaped points).

By examining such graph, improved performance can be noted in terms of the peak pressure of the invention compared to that of the known art.

Figure 6 is a graph comparing the times for reaching the peak pressure of the air fed into the basket during the filter cleaning operation, depending on its position along the basket, between a known device and a device according to an embodiment of the invention.

By examining such graph, improved performance of the invention can be noted compared to the known art.

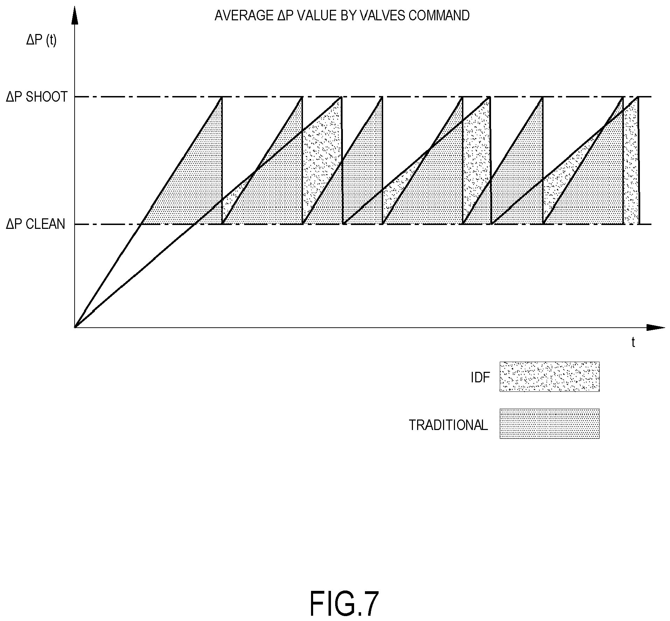

Finally, the comparison between the performance of a tubular filter with a sleeve of the known art (named Conventional) and of a tubular filter with a sleeve (named IDF) bearing one of the embodiments of the invention and which shows the fewer number of shots necessary for keeping the tubular filter efficient, with consequent energy saving which can be considered proportional to the area subtended by the respective sawtooth lines, is depicted in fig. 7.

Obviously, a technician of the field can make further changes and variations to the present invention, all thereby comprised in the protection scope of the invention, as defined by the following claims, for the purpose of meeting contingent and specific needs.

## Claims

1. Device for supplying pressurized air into a tubular filter (100) supported by a basket (101) provided with an upper collar (16), wherein the aforesaid device comprises at least one Venturi tube (12, 22, 32) of the type comprising an inlet portion (13, 23, 33), a narrow cylindrical portion (11, 21, 31) and an outlet portion (15, 25, 35), said Venturi tube (12, 22, 32) being provided, at its inlet portion (13, 23, 33), with a ring-shaped bracket (14, 24, 34) connectable to the aforesaid basket (101) by means of a plurality of fastening and connecting supports (19, 29, 39) configured for reversibly fastening to one another and distancing the aforesaid ring-shaped bracket (14, 24, 34) from the upper collar (16) of the basket (101) and for defining at least one portion for the passage of air between the Venturi tube (12, 22, 32) and the basket (101), said outlet portion (15, 25, 35) of the Venturi tube being shaped for being housed within the tubular filter (100).

2. Device according to claim 1, wherein at least one substantially axial opening (18, 28, 38) is provided on the aforesaid ring-shaped bracket (14, 24, 34) and through which a flow of air can flow.

3. Device according to claim 1 or 2, wherein the outer diameter of the ring-shaped bracket (14, 24, 34) is equal to or greater than the outer diameter of the upper collar (16) of the basket (101).

4. Device according to any one of the preceding claims, wherein the distance of the ring-shaped bracket (14, 24, 34) from the upper collar (16) of the basket (101) is not less than 10 mm.

5. Device according to the preceding claims, wherein the ratio d/D between the maximum diameter (d) of the inlet portion (13, 23, 33) of the Venturi tube (12, 22, 32) and the outer diameter (D) of the collar (16) can range from a minimum of 0.9 to a maximum of 1.25, with values centered around 1 on the average.

6. Device according to the preceding claims, wherein the ratio d/D1 between the maximum diameter (d) of the inlet portion (13, 23, 33) of the Venturi tube (12, 22, 32) and the diameter (D1) of the narrow portion (11, 21, 31) of the Venturi tube (12, 22, 32) can range from a minimum of 1.4 to a maximum of 1.9, more preferably from a minimum of 1.5 to a maximum of 1.8.

7. Device according to the preceding claims, wherein the at least one Venturi tube (12, 22, 32) is removable and replaceable.

8. Device according to any one of the preceding claims, wherein the ratio (a/A) between the area (a) of the portion for the passage of air between the Venturi tube (12, 22, 32) and the upper collar (16) of the basket (101) and the area (A) of the portion, orthogonal to the respective axis, of the tubular filter (100) below the Venturi tube (12, 22, 32), is between 0.08 and 0.24.

9. Filtering device of the type comprising a tubular filter (100) supported by a basket (101) provided with an upper collar (16) to which a device (10, 20, 30) according to claims 1-7 is connected, wherein said device facilitates the cleaning of said tubular filter and the passage of the air filtered, also in the areas less affected by the shock wave generated by the nozzle operated by the compressor.
